# DEMANDE DE BREVET EUROPEEN

(11) **EP 1 961 555 A1**
(43) Date de publication de la demande: **27.08.2008**
(21) Numéro de dépôt: 07102775.9
(22) Date de dépôt: 21.02.2007
(51) Int. Cl.: B32B 17/10, C03C 27/12, C03C 17/36, E04B 2/88, E06B 3/54

(54) **Vitrage pare-flamme**

(71) Demandeur: AGC Flat Glass Europe SA, 1170 Bruxelles (BE)
(72) Inventeur: La désignation de l'inventeur n'a pas encore été déposée
(74) Mandataire: Decamps, Alain René François

(57) **Abrégé**

La présente invention concerne un vitrage pare-flamme comprenant au moins une feuille de verre revêtue d'un système de couches dont au moins une couche réfléchissant les infrarouges , couche à base d'argent, et des couches diélectriques, au moins une des couches diélectriques du système étant constituée d'oxyde mixte de zinc et d'étain, le rapport atomique zinc/étain étant supérieur ou égal à 40% et pouvant aller jusqu'à 95%. La présente invention concerne aussi un châssis vitré pare-flamme 30 à 90 minutes suivant les normes EN 1363 , EN 1364 ou IMO A.753-18, dans lequel un ou plusieurs vitrages pare-flamme sont enchâssés, le châssis étant soit à rupture de pont thermique soit à usage maritime.

## Description

La présente invention concerne les vitrages dits "pare-flamme", vitrages qui présentent des propriétés telles qu'ils s'opposent à la propagation des flammes et des fumées produites par un incendie. Plus précisément si certains vitrages "anti-feu" font aussi obstacle au rayonnement en développant un écran sous l'effet de la chaleur, notamment à partir d'un matériau intumescent à base de silicate alcalin hydraté, les vitrages pare-flamme dont il est question ci-après conduisent à une réduction du rayonnement susceptible de contribuer à la propagation de l'incendie en faisant sélectivement écran aux rayons infrarouges au moyen de systèmes de couches minces d'oxydes métalliques, qui conservent l'essentiel de la transparence aux longueurs d'ondes du visible.

Les vitrages pare-flamme de ce type sont connus par ailleurs pour présenter soit une transmission lumineuse élevée, soit des propriétés de contrôle solaire, les mêmes couches minces dont ils sont revêtus s'opposant à la transmission des rayons qu'ils proviennent d'un incendie ou de l'ensoleillement. Les caractéristiques antisolaires conduisent notamment à leur utilisation en façade de bâtiments. Les vitrages pare-flamme peuvent aussi être employés dans des conditions où le rayonnement solaire n'intervient pas, notamment pour la constitution de parois d'intérieur.

Pour leur conférer la résistance nécessaire aux propriétés pare-flamme, les vitrages en question doivent pouvoir supporter des contraintes élevées telles que celles générées par les températures résultant de l'exposition au feu. Pour cela les vitrages doivent nécessairement être trempés, et il faut encore éviter qu'ils ne se brisent prématurément en fragments de petites dimensions lors de l'exposition au feu pour assurer l'étanchéité requise jusqu'à des températures élevées.

Une particularité des systèmes de couches dont sont revêtus les vitrages pare-flamme, est de pouvoir supporter sans dommage les traitements thermiques qui sont les plus usuels pour la trempe des feuilles de verre. Ces traitements conduisent à exposer ces couches à des températures qui peuvent dépasser 650°C ou même davantage. Pour des raisons économiques, on utilise des verres "float" de composition courante (verres silico-sodo-calciques) et la formation des couches doit intervenir avant la trempe des feuilles de verre ; les couches sont alors soumises aux conditions de trempe et doivent conserver ou améliorer ou acquérir leurs propriétés tant comme filtre des rayons IR que pour la transmission lumineuse ou encore la neutralité de couleur, lorsque notamment les vitrages en question ne sont pas colorés.

La nécessité de remplir ces conditions impose un choix de couches bien spécifique, en particulier pour les systèmes comportant une ou plusieurs couches métalliques disposées entre des couches diélectriques. Les traitements thermiques sont connus pour pouvoir modifier les qualités des couches métalliques utilisées comme réflecteurs des IR. Il est nécessaire pour conserver ces propriétés de protéger ces couches métalliques de façon appropriée, en pratique en leur associant des couches de protection ou couches "barrières" convenablement sélectionnées.

Pour rendre les vitrages encore plus résistants aux chocs thermiques, il peut être avantageux aussi d'utiliser des vitrages à très faible coefficient de dilatation, tels que les verres de boro-silicates, ou de façon générale les vitro-céramiques, mais ceux-ci sont plus coûteux.

Les vitrages pare-flamme lorsqu'ils sont disposés en façade de bâtiments doivent normalement être isolants thermiques. Pour conférer les meilleures propriétés isolantes aux châssis vitrés, les vitrages sont constitués de feuilles de verre doubles ou même triples, et sont montés dans des châssis appropriés. Par exemple les châssis vitrés doivent présenter un coefficient U inférieur à 1,5W/m².°C. Pour atteindre ces performances on utilise ordinairement des châssis dits "à rupture de pont thermique" constitués de plusieurs chambres séparées et/ou garnis de matériaux isolants thermiques.

L'utilisation de châssis de ce type accroît le risque de casse des verres lors des épreuves au feu. En effet les bords du vitrage se réchauffent d'autant plus lentement que l'isolation, ou la "rupture thermique", est mieux assurée. Lors d'une épreuve au feu il se développe un gradient de température important entre la surface du vitrage exposée directement au feu et les bords masqués par le châssis et isolés du feu. Ce gradient de température accroît les contraintes du vitrage en particulier dans les premières minutes des épreuves au feu normalisées, au cours desquelles la montée en température des surfaces exposées est la plus rapide. Ces contraintes peuvent devenir telles qu'elles causent la casse prématurée du vitrage.

Des cadres à rupture de pont thermique sont notamment ceux commercialisés sous les noms "Jansen Viss TV", "Janisol 2" et "Forester Unico". Ces cadres jouent sensiblement le même rôle. Ils se distinguent par des structures plus ou moins complexes.

L'invention offre l'avantage de permettre l'utilisation de tels cadres, et donc de disposer de châssis vitrés offrant les meilleures propriétés d'isolation thermique, tout en prévenant les risques de casse prématurée lorsque les vitrages sont soumis aux épreuves au feu. La présence du système de couches réfléchissant les infrarouges ralentit sensiblement l'échauffement du verre dans les surfaces exposées et par voie de conséquence, les contraintes qui se développent dans le verre au début de ces épreuves.

Des vitrages pare-flamme en comprenant des feuilles de verre trempé revêtues de couches réfléchissant les infrarouges ont été proposés antérieurement, en particulier dans la demande WO 00/37383. Les exemples de vitrages présentés dans cette demande comportent des systèmes de couches dits "trempables", qui sont à base de couches d'argent et comprenant une ou plusieurs couches diélectriques à base d'oxyde de zinc dopé à l'aluminium et de couches de nitrure d'aluminium.

L'invention se propose de fournir des vitrages du type de ceux de la demande précitée, et présentant des propriétés encore améliorées notamment en terme de résistance au feu. L'invention se propose notamment de fournir des vitrages pare-flamme qui puissent être utilisés avec des châssis à rupture de pont thermique, et qui résistent au choc thermique lors d'essais au feu, notamment aux essais normalisés EN 1363-1, EN 1364-1.

Comme il est connu, les vitrages pare-flamme font l'objet d'une classification en fonction de leurs performances dans des épreuves qui font l'objet d'une normalisation. Ces vitrages sont classés "E" ou "EW", "E" pour étanchéité, "W" pour leur aptitude à faire obstacle au rayonnement infrarouge. La performance est indiquée sous forme d'un nombre : 30, 60, 90 ou plus, qui exprime la durée en minutes pendant laquelle le vitrage résiste à l'épreuve normalisée à laquelle il est soumis.

De façon particulière l'invention se propose donc de fournir des vitrages pare-flamme, qui comportent des systèmes de couches choisis de telle sorte que, toutes caractéristiques identiques par ailleurs, les propriétés de résistance au feu de ces vitrages soient encore améliorées.

Selon l'invention les vitrages pare-flamme comportent au moins une feuille de verre revêtue d'un système de couches lequel comprend au moins une couche métallique à base d'argent, destinée à réfléchir sélectivement les rayons infrarouges, et des couches diélectriques destinées à protéger la couche à base d'argent tout en participant au contrôle de la réflexion dans le domaine des longueurs d'onde du visible, au moins une des couches diélectriques du système étant une couche constituée d'oxyde mixte de zinc et d'étain, le rapport atomique zinc/étain étant supérieur ou égal à 40% et pouvant aller jusqu'à 95%.

Antérieurement des systèmes comprenant de telles couches ont été proposés essentiellement pour les propriétés anti-solaires qu'ils confèrent aux feuilles de verre sur lesquelles ils sont appliqués. Par ailleurs ces systèmes sont connus pour leur résistance aux traitements thermiques de type trempe ou bombage. Ces derniers, comme indiqué précédemment conduisent les feuilles de verre à des températures qui peuvent atteindre et dépasser 650°C, sans que les couches perdent leurs propriétés de réflexion des infrarouges. Il est apparu aux inventeurs que le critère de la résistance aux traitements de ce type ne garantissait pas nécessairement un très bon comportement pare-flamme, notamment lorsque ces vitrages sont montés dans des châssis à rupture de pont thermique, et qu'il existait des différences significatives entre les produits dits "trempables".

Dans la pratique les vitrages présentant les émissivités les plus faibles sont aussi ceux qui paraissent les moins sensibles à l'épreuve du feu. Ils conservent leurs aptitudes à réfléchir les infrarouges sensiblement plus longtemps dans les conditions de l'incendie. Mais le niveau initial de l'émissivité n'est sans doute pas le seul facteur qui conduise à ce résultat. Les systèmes de couches, et les propriétés de réflexions qu'ils présentent, peuvent notamment aussi s'altérer plus ou moins en fonction de leur aptitude à développer et/ou résister aux contraintes induites par l'élévation de température.

Les vitrages revêtus des couches d'argent comprenant les diélectriques à base d'oxydes mixtes de zinc et d'étain sont parmi ceux qui présentent les émissivités les plus faibles pour une masse d'argent par unité de surface donnée. Ils sont aussi ceux qui selon l'invention offrent les meilleurs résultats en durée de protection contre le feu.

Avantageusement selon l'invention au moins une couche diélectrique du système de couches comporte une couche d'oxyde mixte de zinc et d'étain dont le rapport atomique est supérieur à 45% et inférieur à 60%.

De façon avantageuse les vitrages selon l'invention comportent un système de couches comprenant au moins deux couches à base d'argent séparées par une ou plusieurs couches diélectriques dont au moins une à base d'oxyde mixte de zinc et d'étain dans les proportions atomiques indiquées ci-dessus. Des systèmes de couches de ce type sont décrits notamment dans la publication WO 01/27050 incorporée par référence. En pratique ces systèmes à deux couches d'argent permettent d'atteindre une émissivité très faible avec une atténuation de la transmission lumineuse visible limitée et une bonne neutralité de couleur en réflexion.

Avantageusement les systèmes de couches selon l'invention présentent après traitement thermique de type bombage/trempe, une émissivité qui n'est pas supérieure à 0,04, de façon préférée pas supérieure à 0,03, et de façon particulièrement avantageuse qui n'est pas supérieure à 0,025.

Selon une disposition de l'invention les vitrages revêtus des couches en question présentent au cycle de traitement thermique A, une variation de la valeur relative de l'émissivité qui n'est pas supérieure à 20% et de préférence pas supérieure à 10%. Le traitement thermique A comprend la mise de l'échantillon dans un four à 600°C pendant 60 minutes. Les mesures sont faites sur l'échantillon préalablement refroidi jusqu'à la température ambiante.

Selon une autre caractéristique des vitrages selon l'invention, le système de couches est choisi de telle sorte que le rayonnement mesuré selon les normes EN 1363-1 et EN 1364-1 soit inférieur à 15kW/m² après 60 minutes d'exposition au feu, et de façon préférée que cette même valeur soit respectée après 90 minutes d'exposition.

Pour que les propriétés des feuilles de verre revêtues de ces systèmes de couches puissent se manifester pleinement, il faut prévenir la formation de contraintes dans ces feuilles, contraintes liées notamment aux moyens utilisés pour les maintenir en place. Comme indiqué précédemment, les châssis essentiellement métalliques, dans lesquels les feuilles de verre sont disposées, s'échauffent d'une façon qui diffère de celle des feuilles de verre. Cette différence est d'autant plus sensible que l'on utilise des châssis à rupture de pont thermique. L'invention en proposant l'utilisation de feuilles de verre revêtues d'un système de couches présentant une forte réflexion dans l'infrarouge réduit l'impact des chocs thermiques correspondant à l'épreuve au feu, et permet l'utilisation de ces châssis sans accroître de façon rédhibitoire le risque de casse thermique prématurée.

L'invention est décrite de façon détaillée dans la suite, en faisant référence aux planches de dessins dans lesquelles :
- la figure 1 représente schématiquement en coupe une feuille de verre revêtue d'un premier système de couches S réfléchissant les infrarouges ;
- la figure 2 représente schématiquement en coupe une feuille de verre revêtue d'un deuxième système de couches S' réfléchissant les infrarouges ;
- la figure 3 représente un vitrage isolant comprenant une feuille de verre revêtue d'un système de couches réfléchissant les infrarouges ;
- la figure 4 représente un vitrage isolant dont les deux feuilles sont revêtues d'un système de couches réfléchissant les infrarouges ;
- la figure 5 représente un vitrage feuilleté revêtu d'un système de couches réfléchissant les infrarouges ;
- la figure 6 représente un vitrage comprenant simultanément un système de couches réfléchissant les infrarouge et un produit intumescent ;
- la figure 7 représente un vitrage triple dans un châssis, destiné par exemple à l'usage maritime ;
- la figure 8 représente un autre vitrage analogue à celui de la figure 7 ;
- la figure 9 et un graphique illustrant l'évolution de l'émissivité de deux feuilles de verre revêtues d'un système de couches réfléchissant les infrarouges, lorsque ces feuilles sont soumises à un traitement thermique ;
- la figure 10 est un graphique représentant les conditions de température au cours de l'épreuve au feu selon EN 1363-1.

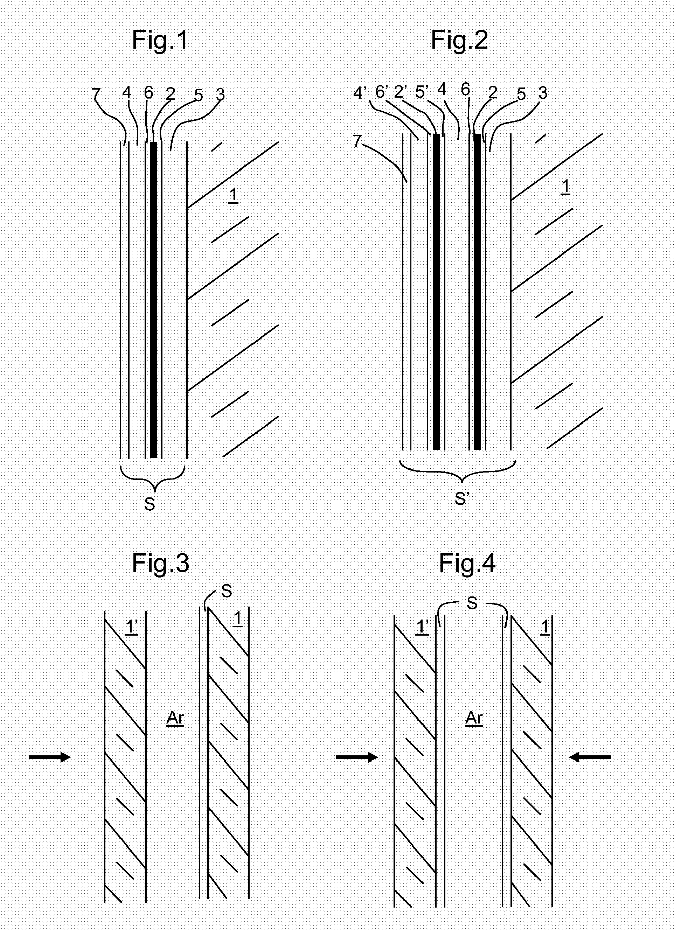

La figure 1 présente la structure typique d'une feuille de verre revêtue d'un système de couches réfléchissant les infrarouges.

Sur le substrat formé d'une feuille de verre 1, le système de couches comprend une couche métallique mince 2, typiquement constituée d'argent ou d'un alliage à base d'argent. La couche d'argent est préférée à celle d'autres métaux tels que l'or en raison de sa très bonne conductivité à faible épaisseur, ce qui permet de limiter la perte de transmission lumineuse.

La couche à base d'argent peut contenir une faible teneur en métal tel que le palladium, pour améliorer ses propriétés de conduction électrique.

De manière connue la couche à base d'argent est prise entre deux couches diélectriques 3 et 4, qui permettent de minimiser la réflexion des rayonnements du domaine des longueurs d'ondes du visible, et simultanément peuvent ajuster la réflexion de façon que celle-ci soit aussi neutre en couleur que possible lorsque ces caractéristiques sont recherchées. C'est le cas le plus fréquent pour les vitrages que l'on veut aussi incolores que possible. Néanmoins, dans certains cas pour des raisons esthétiques notamment, une certaine réflexion et/ou une certaine coloration sont préférées. Le choix de la nature et de l'épaisseur des couches diélectriques permet d'ajuster les caractéristiques du vitrage dans ce sens.

Les systèmes comportent encore traditionnellement sous l'argent une couche 5, dont le rôle est notamment de favoriser la croissance de la couche d'argent dans une structure conduisant à des caractéristiques de conduction optimisées. Ces couches sont en particulier des couches à base d'oxyde de zinc éventuellement dopées à l'étain ou à l'aluminium. Les couches dopées à l'étain présentent des avantages en raison de leur grande stabilité à l'épreuve thermique. Dans ces couches la part de dopant est de préférence maintenue à moins de 20% et de préférence à moins de 10%.

Les couches dont le rôle est de favoriser la croissance d'une couche d'argent performante, sont d'épaisseur relativement faible. Des épaisseurs plus importantes peuvent en effet conduire à une croissance de la couche à base d'oxyde de zinc sous forme colonnaire, structure qui n'est pas favorable par l'irrégularité de l'interface qu'elle développe avec la couche à base d'argent. L'épaisseur de ces couches à base d'oxyde de zinc ne dépasse pas de préférence 20nm et avantageusement pas 10nm.

Pour protéger la couche d'argent contre l'altération qui peut résulter du dépôt ultérieur des couches diélectriques qui la recouvrent, il est traditionnellement utilisé une ou plusieurs couches 6, dites couches "barrières" ou "sacrificielles". Ces couches sont constituées de matériaux capables notamment de fixer préférentiellement l'oxygène et de protéger la couche à base d'argent contre l'oxydation. Des couches barrières traditionnelles sont constituées de métaux ou alliages éventuellement partiellement oxydés. Des barrières traditionnelles sont à base notamment de Ti, de NiCr. Le rôle de barrière est éventuellement rempli par plusieurs couches superposées, l'ensemble restant de faible épaisseur pour ne pas modifier sensiblement les caractéristiques, notamment de transmission lumineuse. L'épaisseur de la ou des barrières ne dépasse pas ordinairement 8nm, et le plus souvent n'est pas supérieure à 6,5nm.

De manière également traditionnelle, une couche extérieure protectrice 7 peut compléter l'ensemble. Cette couche a pour fonction principale de protéger les couches sous-jacentes qui ne présentent pas nécessairement la résistance mécanique ou chimique la plus appropriée. Ces couches sont d'épaisseur limitée au strict nécessaire, leurs caractéristiques optiques, notamment en transmission, n'étant pas toujours favorables. Des couches résistantes sont par exemple à base de TiO₂, TiN, Si₃N₄...

L'invention est particulièrement remarquable par le rôle que jouent les couches 3 et/ou 4. Au moins une de ces couches est à base d'oxyde mixte de zinc et d'étain avec les proportions atomiques indiquées précédemment, à savoir un rapport zinc/étain supérieur ou égal à 40% et pouvant aller jusqu'à 95%. Les couches en questions peuvent aussi être remplacées par un ensemble de plusieurs couches diélectriques dont une au moins une répond à la définition rappelée ci-dessus.

Vis-à-vis des systèmes de couches anti-réfléchissants proposés antérieurement, notamment dans WO 00/37383, à structure analogue, autrement dit avec les mêmes types de couches agencées dans la même séquence, ceux de l'invention procurent une amélioration sensible de la résistance à l'épreuve du cycle thermique A. Par suite ces systèmes offrent une meilleure qualité pare-flamme. Les raisons de cette amélioration sont encore pour partie hypothétiques. Parmi ces raisons il est probable que les couches à base d'oxyde mixte de zinc et d'étain sont moins sensibles au stress occasionné par le traitement thermique. En résistant mieux elles offrent une meilleure stabilité à l'ensemble du système et, notamment, préservent plus longtemps les propriétés de faible émissivité de la couche d'argent.

L'épaisseur de la couche d'argent détermine les propriétés de réflexions des infrarouges. Plus la couche est épaisse, plus basse est l'émissivité. Il faut cependant maintenir la quantité d'argent par unité de surface dans des limites qui ne réduisent pas de façon excessive la transmission lumineuse. Pour une couche d'argent les quantités déposées ne dépassent pas ordinairement 200mg/m². Elles sont habituellement inférieures à 180mg/m².

L'accroissement de la couche à base d'argent peut entraîner des colorations en réflexion indésirables. En particulier les vitrages peuvent présenter une coloration pourpre plus ou moins prononcée, que le choix des diélectriques situés au-dessus et au-dessous de cette couche réfléchissante ne permet pas toujours de corriger efficacement.

Pour mieux contrôler la neutralité de couleur tout en augmentant la capacité de réflexion des infrarouges, les systèmes comportent de préférence plusieurs couches à base d'argent. Dans la pratique le nombre de couches est habituellement de deux, et plus rarement de trois. Le nombre de couches à base d'argent conduit à des quantités qui sont néanmoins toujours limitées même si elles sont supérieures à celles des monocouches d'argent. En pratique la quantité totale d'argent ne dépasse pas 300mg/m² et de référence est inférieure à 260mg/m².

La figure 2 représente une feuille de verre 1 revêtue d'un système de couches comprenant deux couches d'argent 2 et 2'. Comme pour le système ne comprenant qu'une couche d'argent, des couches diélectriques 3, 4 et 4' sont disposées pour limiter les réflexions des couches d'argent et simultanément contribuer à leur protection. De même des couches 5 et 5' favorisant la formation de couches d'argent présentant une bonne structure sont avantageusement disposées sous les couches d'argent et au contact de celles-ci. Le système présenté à la figure 2 comprend encore des couches barrières 6 et 6' situées au dessus de l'argent, et éventuellement une couche 7 dure conférant au système une protection contre les risques d'altération mécanique.

L'amélioration introduite par la présence d'un système à plusieurs couches d'argent est particulièrement favorable aux propriétés pare-flamme des vitrages selon l'invention comme présenté plus loin avec des exemples comparatifs.

Que les systèmes de couches soient du type S, à simple couche d'argent, ou du type S', à plusieurs couches d'argent, les feuilles de verres revêtues sont mises en oeuvre avantageusement dans des vitrages qui font l'objet des figures 3 à 8. Dans tous ces exemples les vitrages comportent plusieurs feuilles de verre, une d'entre elles au moins comportant un système de couches tel que décrit précédemment.

La figure 3 présente un vitrage de type isolant constitué de deux feuilles de verre 1 et 1' distantes l'une de l'autre. L'espace entre les deux feuilles de verre est habituellement rempli d'un gaz qui contribue à l'isolation, par exemple de l'argon.

Le vitrage de la figure 3 comporte une feuille 1 revêtue d'un système de couche d'un des types présentés précédemment. La configuration de la figure 3 offre l'avantage de protéger le système de couches des possibles dégradations en l'enfermant entre les deux feuilles de verre.

La position de l'unique système de couches dans la représentation de la figure 3 doit assurer son efficacité dans l'épreuve au feu. Le côté exposé au feu est indiqué d'une flèche. Pour le cas considéré le feu est supposé se situer à gauche du vitrage. Dans cette disposition le système de couches n'est pas sur la feuille l' exposée en premier au feu. La feuille 1' supporte le choc thermique le plus intense. D'une température ambiante, la feuille est exposée instantanément à des températures de plusieurs centaines de degrés.

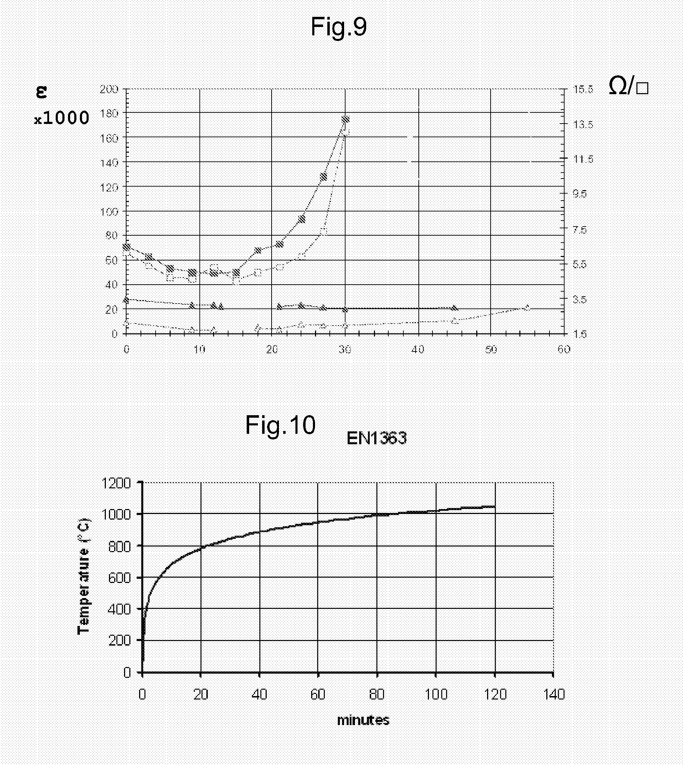

L'évolution de la température en fonction du temps dans l'épreuve selon EN 1363-1 est représentée à la figure 10. On constate que la croissance la plus rapide se situe dans les dix premières minutes de l'épreuve. Dans ce temps la température atteinte est de l'ordre de 700°C.

Compte tenu de la croissance très rapide de la température en début d'épreuve, des contraintes se développent d'une ampleur telle que la feuille trempée 1' se brise peu de temps après le début de l'épreuve exposant la seconde feuille de verre 1. La feuille 1 s'échauffe plus lentement en raison notamment de ce qu'elle est protégée par le système de couches qui réfléchit une part significative de l'énergie rayonnée. De cette façon la feuille 1 peut supporter l'épreuve pendant des périodes encore relativement longues avant de céder à son tour par fluage lorsque le verre atteint des températures de ramollissement.

Un essai d'un vitrage tel que représenté à la figure 3 est effectué dans les conditions normalisées indiquées précédemment. Pour cet essai les deux feuilles de verre trempé de 6mm d'épaisseur chacune sont distantes de 12mm. Une des feuilles porte un système de couches selon l'invention, comprenant une seule couche d'argent. Ce système est décrit plus loin à propos de la comparaison des propriétés des verre comprenant une ou deux couches d'argent, comparaison décrite en se référant à la figure 9.

Les dimensions du vitrage sont 1200x2300mm. Le châssis utilisé est de type commercialisé sous le nom Jansen Viss TV.

Le vitrage ainsi constitué n'est percé qu'après 58 minutes d'exposition. La radiation mesurée de 15kW/m² n'est atteinte qu'après plus de 60 minutes. Le vitrage de grandes dimensions s'avère un bon vitrage pare-flamme dont la performance est très supérieure à la catégorie EW 30.

Le sens d'un éventuel incendie n'est pas toujours prévisible. Par ailleurs des prescriptions règlementaires spéciales à certains pays, imposent de n'utiliser que des verres qui offrent la même protection indépendamment du sens probable d'un éventuel incendie. Pour répondre à ces exigences il est alors avantageux d'utiliser un vitrage isolant du type présenté à la figure 4. Dans ce vitrage les deux feuilles de verre comportent un système de couches tel que présenté ci-dessus. Dans cette configuration, et quel que soit le côté effectivement exposé à l'incendie, le processus décrit à propos de la figure 3 peut se développer. La première feuille exposée au feu est rapidement détruite et avec elle les couches qui la recouvrent, mais la seconde feuille joue comme précédemment son rôle pare-flamme.

Dans la représentation de la figure 4, les deux feuilles de verre et leur système de couches sont présentés comme identiques. Ceci est le cas le plus usuel pour ce type de configuration. Il est également possible d'envisager des systèmes dissymétriques, en ce qui concerne soit le verre, soit les couches, soit encore pour les deux.

Dans ces vitrages les feuilles de verre sont trempées pour leur conférer à la fois une résistance certaine aux contraintes, notamment thermiques, et faire en sorte qu'en cas de choc mécanique les feuilles se brisent en petits morceaux (de type 1C1 selon la norme EN 12600). Les contraintes des feuilles peuvent avantageusement se situer de 40 à 200MPa, et le plus souvent de 50 à 150MPa.

A défaut de feuilles trempées, il serait possible d'utiliser des feuilles armées. De telles feuilles sont cependant peu recherchées en pratique en raison de leur aspect inesthétique, de leurs qualités optiques limitées et de leur incommodité de fabrication. Pour ces raisons selon l'invention l'utilisation de feuilles armées n'est pas préférée. Cette utilisation n'intervient éventuellement que pour les feuilles de verre exposées directement au feu mais pas pour la feuille comportant un système de couches tel que mis en oeuvre selon l'invention.

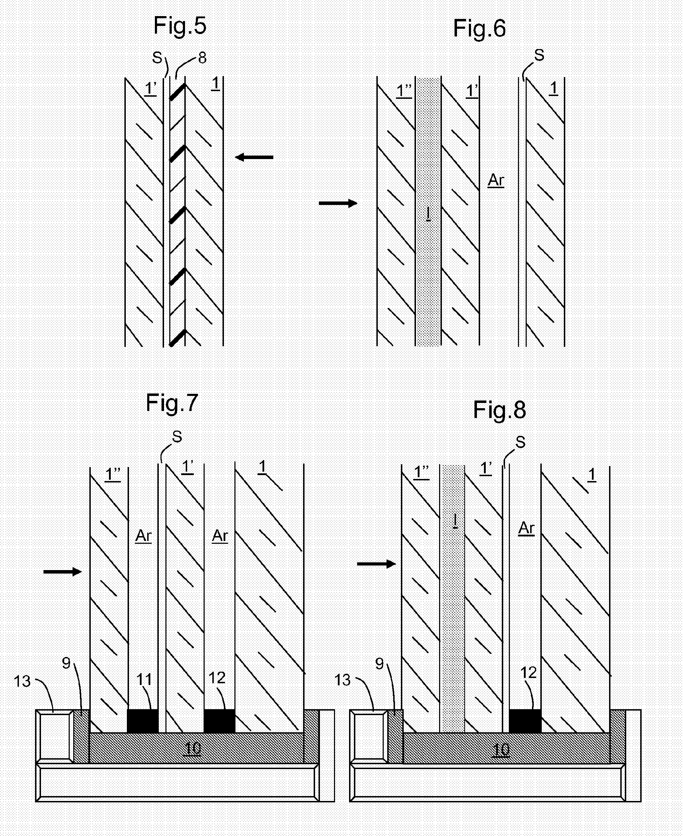

A défaut de feuilles de verre armé, il est possible de renforcer les propriétés mécaniques des vitrages selon l'invention en utilisant par exemple des vitrages feuilletés tels que présentés à la figure 5. Dans ces vitrages, le caractère organique de la feuille intercalaire assemblant les deux feuilles de verre 1 et 1', conduit à la destruction de cette feuille à des températures qui ne dépassent pas généralement 350°C. Au-delà, la feuille intercalaire se décompose n'assurant plus le maintien des feuilles de verre.

Le vitrage représenté à la figure 5 associe feuilletage et couche réfléchissante. A l'épreuve au feu la feuille intercalaire organique 8, se décompose progressivement comme indiqué ci-dessus, dégageant le système de couches qui joue alors le rôle décrit précédemment vis-à-vis de la feuille de verre 1'. Le bénéfice de cette structure est encore d'offrir la résistance mécanique traditionnelle des vitrages feuilletés (de type 1B1 selon la norme EN 12600), tout en gardant un rôle pare-flamme à l'ensemble. Une structure de ce type peut encore être combinée avec une autre feuille de verre pour constituer un vitrage isolant.

Un essai d'un vitrage tel que représenté à la figure 5 est effectué dans les conditions normalisées indiquées précédemment. Pour cet essai les deux feuilles de verre de 6mm d'épaisseur chacune sont feuilletées avec une feuille de PVB (polyvinylbutyral) de 0,76mm d'épaisseur. Une des feuilles porte un système de couches selon l'invention décrit à propos de la figure 9, comprenant une seule couche d'argent. Les couches sont au contact de la feuille de PVB.

Les dimensions du vitrage sont 1200x2300mm. Le châssis utilisé est de type commercialisé sous le nom Forster Presto.

Le vitrage ainsi constitué n'est percé qu'après 55 minutes d'exposition. La radiation mesurée de 15kW/m² n'est atteinte qu'après 51 minutes. Le vitrage de grandes dimensions s'avère un bon vitrage pare-flamme dont la performance est nettement supérieure à la catégorie EW 30.

Les vitrages selon l'invention peuvent encore comprendre des structures telles que celle représentée à la figure 6, à savoir des ensembles comprenant au moins une couche intumescente I, telle qu'utilisée dans de nombreux vitrages anti-feu. Lorsque la couche intumescente est exposée au feu elle forme un écran opaque au rayonnement. Les effets de ces deux types de protection, celui conféré par les couches réfléchissant les infrarouges, et celui de la couche intumescente s'additionnent.

La couche I est par exemple de manière connue constituée de silicate alcalin hydraté. Des exemples de ces matériaux et de leur mise en oeuvre sont décrits notamment dans EP 1 027 404-B.

La figure 7 présente un mode de mise en oeuvre d'un ensemble composé de trois feuilles de verre 1, 1' et 1". Les feuilles de verre sont disposées dans un châssis de type destiné à l'usage maritime (selon IMO A 753-18).

Un tel vitrage à trois feuilles de verre trempé, pour atteindre la classe A0 lorsqu'il est testé suivant la résolution IMO A.753-18, comprend un système de couches réfléchissant les infrarouges orienté vers le feu au-moins sur le verre central, au moins une feuille trempée dont l'épaisseur est de 8 à 25mm, les deux espaces du triple vitrage ayant chacun une épaisseur inférieure ou égale à 10mm.

Dans ces vitrages du type présenté à la figure 7, les contraintes thermiques se développent d'abord dans la feuille de verre 1", du côté directement exposé au feu. Ces contraintes résultent des différences de température qui apparaissent entre les parties de la feuille de verre 1" protégées du feu par le châssis métallique 13 constitué par exemple de profilés tubulaires, d'une part, et le reste de la feuille d'autre part. Les feuilles de verre dans le mode représenté, sont maintenues à distance les unes des autres au moyen d'espaceurs 11, 12 qui sont de préférence métalliques.

La disposition des trois feuilles de verre représentées, est typique d'une utilisation dite "maritime". Ces vitrages sont choisis pour résister à un incendie qui se développerait depuis l'intérieur du navire, tandis que la face extérieure tournée vers les flots doit offrir une tenue mécanique élevée. Un tel vitrage est par exemple composé de l'extérieur vers l'intérieur, d'une feuille de verre trempé 1, d'un espace rempli de gaz isolant Ar, d'une deuxième feuille de verre trempé 1' laquelle porte un système de couches réfléchissant les infrarouges, un second espace rempli de gaz isolant et d'une troisième feuille de verre trempé 1", l'ensemble étant disposé dans un châssis pour usage maritime.

De façon générale la feuille la plus extérieure est aussi la plus épaisse, par exemple de 12mm. Pour offrir une résistance mécanique, et une résistance au choc thermique, adéquates, les contraintes de surface de la feuille trempée sont de l'ordre de 90 à 140MPa. La fonction pare-flamme est principalement assurée par les feuilles 1' et 1. La feuille 1' comporte un système de couches à double couches d'argent du type décrit ci-dessous à propos de l'exemple comparatif de la figure 9.

Trois essais au feu selon les normes EN 1363-1 et EN 1364-1 sont effectués sur un vitrage triple de dimensions 1220x1020mm. La première feuille de verre est détruite dans tous les cas très rapidement, environ 3mn après le début de l'essai. La seconde feuille est détruite dans deux des essais après 62mn, et dans le troisième après 75mn. La dernière feuille ne cède respectivement qu'après 75, 80 et 82mn.

Les vitrages ainsi constitués satisfont aux conditions de classement A0 de la norme des vitrages maritimes selon l'IMO A 753-18.

Un vitrage pare-flamme de ce type de plus de 1 m² peut être obtenu lequel est disposé dans un châssis répondant au moins à la classification E30 ou EW30 selon l'essai normalisé EN-1363-1 et EN 1364-1, le châssis présentant un coefficient U inférieur à 3 W/m²x°C, le vitrage comprenant au-moins une feuille de verre trempé , dont la contrainte de surface est supérieure à 90 MPa, dont l'émissivité est inférieure à 0.05, dont le facteur solaire est inférieur à 50%, dont la longueur d'onde dominante est inférieure à 550 nm, dont la pureté est inférieure à 3 et dont le coefficient U est inférieur à 1.5 W/m²x°C.

Une variante du vitrage maritime est présentée à la figure 8. Cette variante combine le vitrage triple comportant un système de couches réfléchissant les infrarouges et une couche intumescente I qui contribue à l'effet anti-feu.

La qualité des couches en fonction de leurs structures est l'objet du graphique de la figure 9. Deux séries d'échantillons sont testées pour leur émissivité et leur résistance électrique. Les échantillons sont constitués de carrés de verre "float" de 6mm d'épaisseur et de 100x100mm.

La première série d'échantillons reçoit un système de couches comprenant, à partir du verre, une première couche d'oxyde mixte de zinc et d'étain en proportions atomiques égales, puis une couche mince essentiellement constituée d'oxyde de zinc pour favoriser la croissance de la couche d'argent qui lui est superposée (à 135mg/m² d'argent), après une couche barrière à base de nickel-chrome les couches d'oxyde de zinc et d'oxyde mixte de zinc et d'étain analogues aux premières et une couche protectrice de nitrure de titane complètent l'ensemble.

La seconde série reçoit un système analogue à deux couches d'argent. Entre les deux couches d'argent (au total 230mg/m²) on interpose successivement une couche barrière et une couche d'oxyde mixte de zinc et d'étain et une couche mince d'oxyde d'étain.

Les séries des échantillons sont soumises à des épreuves thermiques de durée de plus en plus longues, et les résistances électriques et émissivité sont mesurées après l'épreuve.

Pour ces essais les échantillons sont placés dans un four statique dont la température est fixée à 670°C. Après le temps de séjour indiqué l'émissivité (traits pleins) est mesurée à l'aide de l'appareil TIR 100(Inglas GmbH & Co), et la résistance carrée (pointillés) par Stratometer (Nagy Messsysteme GmbH). Les carrés correspondent aux échantillons à système de couches comprenant une seule couche d'argent, les triangles aux échantillons comportant un système à double couche d'argent.

Le graphique montre, comme il est connu, une corrélation étroite entre l'émissivité et la résistance. Les deux grandeurs sont sensiblement plus petites pour le système à double couche d'argent.

La transmission lumineuse est initialement de 78% pour les échantillons à simple couche d'argent et de 68% pour les doubles couches d'argent. Après traitement au four d'une dizaine de minutes, ces transmissions s'élèvent respectivement à environ 87% et 80%. Cette élévation, comme il est connu, traduit un réaménagement de la structure des couches.

Les émissivités et résistances des deux séries d'échantillons varient d'abord assez peu pendant les 20 premières minutes. Elles demeurent à peu près constantes pour les échantillons à double couche d'argent pendant une période d'au moins 60 minutes, alors que pour les simples couches d'argent on constate une croissance significative après 20 minutes de présence dans le four.

Ces essais montrent l'importance de la structure sur la capacité de ces systèmes à présenter une capacité plus ou moins prolongée de réflexion des infrarouges, lorsqu'elles sont soumises à des conditions simulant une épreuve au feu (épreuve non normalisée). Plus le système de couches offre une émissivité initiale faible, meilleure est sa conservation dans le temps ce qui favorise sensiblement les propriétés pare-flamme des vitrages.

## Revendications

1. Vitrage pare-flamme comprenant au moins une feuille de verre revêtue d'un système de couches dont au moins une couche réfléchissant les infrarouges , couche à base d'argent, et des couches diélectriques, au moins une des couches diélectriques du système étant constituée d'oxyde mixte de zinc et d'étain, le rapport atomique zinc/étain étant supérieur ou égal à 40% et pouvant aller jusqu'à 95%.

2. Vitrage selon la revendication 1 dans lequel au moins une couche diélectrique du système de couches, comporte une couche d'oxyde mixte de zinc et d'étain dont le rapport atomique est supérieur à 45% et inférieur à 60%.

3. Vitrage selon l'une des revendications précédentes **caractérisé en ce qu'**il comprend au moins deux couches à base d'argent réfléchissant les infrarouges.

4. Vitrage selon l'une de revendications précédentes dans le quel le système de couches présente après trempe une émissivité normale qui n'est pas supérieure à 0,04 et de préférence pas supérieure à 0,03.

5. Vitrage selon l'une des revendications précédentes comprenant au moins une feuille de verre revêtu d'un système de couches tel que soumis au cycle de traitement thermique A, la variation relative de son émissivité après traitement n'est pas supérieure à 20% et de préférence pas supérieure à 10%.

6. Vitrage selon l'une des revendications précédentes lequel est monté dans un cadre à rupture de pont thermique.

7. Vitrage selon l'une des revendications précédentes dans lequel le système de couches est choisi de telle sorte que le rayonnement mesuré selon les normes EN 1363-1 et EN 1364-1 soit inférieur à 15kW/m² après 60 minutes d'exposition au feu.

8. Vitrage selon la revendication 7 dans lequel le rayonnement est inférieur à 15kW/m² après 90minutes d'exposition au feu.

9. Vitrage selon l'une des revendications précédentes dans lequel la feuille portant le revêtement réfléchissant les infrarouges est associée à une deuxième feuille de verre maintenue à distance de la première dans un châssis, le système de couches étant tourné vers l'espace situé entre les deux feuilles de verre.

10. Vitrage selon la revendication 9 dans lequel le système de couche revêt la feuille de verre qui n'est pas la plus directement exposée au risque d'incendie.

11. Vitrage selon la revendication 9 dans lequel chacune des feuilles de verre est revêtue d'un système de couches réfléchissant les infrarouges, ces systèmes étant tournés vers l'espace situé entre les deux feuilles de verre.

12. Vitrage selon l'une des revendications précédentes comprenant un ensemble feuilleté constitué de deux feuilles de verre assemblées au moyen d'une feuille intercalaire plastique, le ou les systèmes de couches réfléchissant les infrarouges portés par l'une ou les deux feuilles de verre de l'ensemble feuilleté, étant au contact de la feuille intercalaire.

13. Vitrage selon l'une des revendication précédente comprenant un ensemble feuilleté constitué de deux feuilles de verre entre lesquelles un matériau intumescent à base de silicate alcalin hydraté, le système de couche réfléchissant les infrarouge porté par au moins l'une des feuilles de verre de l'ensemble feuilleté étant au contact du matériau intumescent.

14. Vitrage selon l'une des revendications 9 à 13 comprenant en plus au moins une feuille de verre trempé supplémentaire à distance de l'ensemble comportant au moins une feuille portant un système de couches réfléchissant les infrarouges.

15. Vitrage selon la revendication 14 dans lequel la feuille de verre supplémentaire est tournée du côté non exposé directement au risque d'incendie.

16. Vitrage anti-feu classés A0 lorsque testés suivant la résolution IMO A.753-18 comprenant trois feuilles de verre trempé, dans lequel au-moins le verre central comporte une couche **caractérisée** suivant l'une des revendications 1 à 5 et orientée vers le feu, et une feuille trempée dont l'épaisseur est de 8 à 25mm, les deux espaces du triple vitrage ayant chacun une épaisseur inférieure ou égale à 10mm.

17. Vitrage pare-flamme de plus de 1 m² disposé dans un châssis répondant au moins à la classification E30 ou EW30 selon l'essai normalisé EN-1363-1 et EN 1364-1, le châssis présentant un coefficient U inférieur à 3 W/m²x°C, et comprenant au-moins une feuille de verre trempé , dont la contrainte de surface est supérieure à 90 MPa, dont l'émissivité est inférieure à 0.05, dont le facteur solaire est inférieur à 50%, dont la longueur d'onde dominante est inférieure à 550 nm, dont la pureté est inférieure à 3 et dont le coefficient U est inférieur à 1.5 W/m²x°C.
